# EUROPÄISCHE PATENTSCHRIFT

(11) **EP 3 586 391 B1**
(45) Veröffentlichungstag und Bekanntmachung des Hinweises auf die Patenterteilung: **13.05.2020**
(21) Anmeldenummer: 18732668.1
(22) Anmeldetag: 29.05.2018
(51) Int. Cl.: H01M 8/2404, H01M 8/00, B65H 29/70

(54) **VERFAHREN ZUM HERSTELLEN EINES BRENNSTOFFZELLENSTAPELS**
METHOD FOR MANUFACTURING A FUEL CELL STACK
PROCÉDÉ DE MANUFACTURE D'UN EMPILEMENT DE PILES À COMBUSTIBLE

(30) Priorität: 29.06.2017 DE 102017006138
(43) Veröffentlichungstag der Anmeldung: 01.01.2020
(73) Patentinhaber: Audi AG, 85045 Ingolstadt (DE)
(72) Erfinder: DOLLINGER, Peter, 85049 Ingolstadt (DE); SCHIMMER, Thomas, 85051 Ingolstadt (DE); HILDEBRAND, Carsten, 85049 Ingolstadt (DE); HÖGG, Ludwig, 71711 Steinheim (DE); GRETZER, Markus, 85072 Eichstätt (DE); REISS, Hans, 85049 Ingolstadt (DE); KLUY, Norbert, 85132 Schönfeld (DE)
(86) Internationale Anmeldenummer: PCT/EP2018/063979
(87) Internationale Veröffentlichungsnummer: WO 2019/001876

(56) Entgegenhaltungen:
- DE-U1-202016 101 811
- JP-A- 2001 319 673
- US-A1- 2013 323 584
- US-A1- 2015 221 971
- US-A1- 2017 162 887

## Beschreibung

Die Erfindung betrifft ein Verfahren zum Herstellen eines Brennstoffzellenstapels und ein System zum Herstellen eines Brennstoffzellenstapels.

Beim Stapeln eines Brennstoffzellenstapels bzw. eines Brennstoffzellenstacks werden nacheinander bis zu mehrere Hundert Brennstoffzellenschichten aufeinander gestapelt. Dabei können diese Brennstoffzellenschichten aus biegeweichem Material bestehen. In der Regel werden die Brennstoffzellenschichten lose aufeinander gelegt. Sobald eine vorgesehene Anzahl an Brennstoffzellenschichten übereinander gestapelt worden ist, werden diese verpresst. Zwischen jeweils zwei Brennstoffzellenschichten befindet sich ein Zwischenraum, der beim Betrieb des Brennstoffzellenstapels durch Medien durchströmt wird, weshalb jede Brennstoffzellenschicht an ihrem Rand abzudichten ist. Zum Abdichten wird ein verformbares Material verwendet, das aufgrund einer Krafteinwirkung eine geschlossene Kontaktfläche zwischen zwei Brennstoffzellenschichten erzeugt. Weiterhin bildet jede Brennstoffzellenschicht mit dem umrandenden Material ein Lageelement.

Daraus ergibt sich, dass das zum Dichten verwendete Material ohne äußeren Druck eine größere Höhe als eine jeweilige Brennstoffzellenschicht aufweist, die von dem Material umrandet ist. Aufgrund des zur Dichtung vorgesehenen Materials ergibt sich in einem Randbereich des Lageelements, der durch das Dichtungsmaterial gebildet ist, gegenüber einem mittleren Bereich, der aus einer Brennstoffzellenschicht besteht, eine größere Schichtungshöhe. Da die Brennstoffzellenschicht biegeweich ist, wird diese zu ihrer Mitte hin durchgebogen, wodurch u. a. eine Geometrie einer obersten Brennstoffzellenschicht während des Stapelvorgangs verändert wird.

Um Genauigkeitsanforderungen der übereinander abgelegten Brennstoffzellenschichten einhalten zu können, ist es bspw. möglich, Greiferkonstruktionen zu verwenden, die sich dynamisch verformen und somit einer Biegung der Brennstoffzellenschichten anpassen können. Hierdurch wird jedoch ein Aufwand zum Stapeln der Lageelemente erhöht und eine Geschwindigkeit, mit der die Lageelemente übereinander zu stapeln sind, verringert.

Aus der Druckschrift DE 10 2010 052 843 A1 ist ein Verfahren zum Herstellen einer elektrochemischen Energiespeicherzelle bekannt.

Ein Verfahren zum Herstellen einer Membranelektrodenanordnung für eine Brennstoffzelle ist in der Druckschrift DE 10 2006 059 640 A1 beschrieben.

Vor diesem Hintergrund war es eine Aufgabe, einen Brennstoffzellenstapel gegen Verformung zu sichern.

Diese Aufgabe wird mit einem Verfahren und einem System mit den Merkmalen der unabhängigen Patentansprüche gelöst. Ausführungsformen des Verfahren und des Systems gehen aus den abhängigen Patentansprüchen und der Beschreibung hervor.

Das erfindungsgemäße Verfahren ist zum Herstellen eines Brennstoffzellenstapels aus mehreren Lageelementen vorgesehen, wobei die Lageelemente während eines Stapelvorgangs, Lageelement um Lageelement, übereinander gestapelt und somit angeordnet werden. Jedes Lageelement weist eine biegeweiche, elastisch verformbare Brennstoffzellenschicht auf, die von einem Dichtungswulst umrandet ist. Dabei wird die Brennstoffzellenschicht jedes Lageelements aufgrund einer Wirkung der Schwerkraft relativ zu dem Dichtungswulst in Richtung der Schwerkraft bspw. konkav gebogen. Zum Durchführen des Verfahrens wird ein unterstes bzw. erstes Lageelement auf einer biegbaren, elastisch verformbaren Grundplatte angeordnet, die entgegen der Schwerkraft nach oben gebogen wird, wodurch eine Brennstoffzellenschicht eines obersten bzw. letzten bereits gestapelten Lageelements aufgrund einer Kraft, die von der Grundplatte erzeugt wird, entgegen der Schwerkraft nach oben gebogen und/oder angehoben sowie weitgehend eingeebnet bzw. abgeflacht wird.

In Ausgestaltung werden Brennstoffzellenschichten sämtlicher Lageelemente, die bereits über der Grundplatte angeordnet sind, aufgrund der von der Grundplatte erzeugten Kraft ebenfalls entgegen der Schwerkraft nach oben gebogen, wobei die Kraft der Grundplatte über die Brennstoffzellenschichten sämtlicher Lageelemente zwischen der Grundplatte und dem obersten bzw. letzten bereits gestapelten Lageelement, auf die Brennstoffzellenschicht des obersten bzw. letzten bereits gestapelten Lageelements übertragen wird.

Das Verfahren ist bereits zu Beginn eines Stapelvorgangs der Lageelemente durchführbar, wobei vorgesehen ist, dass zu Beginn des Stapelvorgangs das unterste Lageelement, das auf der Grundplatte angeordnet ist, zunächst das einzige Lageelement und somit auch das letzte bzw. oberste Lageelement ist. Dabei ist es möglich, die Brennstoffzellenschicht dieses einzigen Lageelements mit der Grundplatte entgegen der Schwerkraft nach oben zu biegen und somit einzuebnen. Unabhängig von einer aktuellen Anzahl an bereits gestapelten Lageelementen, die der Brennstoffzellenstapel während seiner Herstellung jeweils aktuell aufweist, wird die Kraft und somit eine Wirkung der Grundplatte auf das jeweils aktuell oberste Lageelement indirekt übertragen, falls der Brennstoffzellenstapel bereits mehrere übereinander geschichtete bzw. gestapelte Lageelemente aufweist.

Außerdem ist es möglich, dass zwischen zwei Lageelementen ein weiteres flaches, in der Regel elastisch verformbares Modul angeordnet wird, das aufgrund der Kraft, die von der Grundplatte erzeugt wird, ebenfalls entgegen der Schwerkraft nach oben gebogen wird. Dieses Modul ist in Ausgestaltung als biegeweiche und somit elastisch verformbare Bipolarplatte ausgebildet, die aufgrund der Kraft, die von der Grundplatte erzeugt wird, ebenfalls biegbar ist und bei einer Umsetzung des Verfahrens eingeebnet wird.

Ein Maß für eine konkave Biegung der Brennstoffzellenschicht des obersten Lageelements wird ermittelt, bspw. durch einen optischen und/oder mechanischen Sensor erfasst. Ein Wert für die Kraft, die von der Grundplatte zu erzeugen ist, wird aufgrund dieses Maßes eingestellt. Alternativ oder ergänzend wird der Wert für die Kraft abhängig von einer Anzahl bereits gestapelter Lageelemente eingestellt, wobei hierfür ein funktionaler Zusammenhang zwischen der Anzahl der Lageelemente und dem Wert der Kraft berücksichtigt wird. Dabei wird in Ausgestaltung der Wert der Kraft und/oder das Maß für die Biegung der Brennstoffzellenschicht des obersten Lageelements abhängig von der Anzahl der bereits gestapelten Lageelemente berechnet und/oder abgeleitet.

Während des Stapelvorgangs wird ein zusätzliches Lageelement auf dem obersten bereits gestapelten Lageelement angeordnet, dessen Brennstoffzellenschicht durch die Grundplatte aktuell weitgehend eingeebnet wird bzw. ist.

Das erfindungsgemäße System ist zum Herstellen eines Brennstoffzellenstapels aus mehreren Lageelementen unter Durchführung eines Stapelvorgangs ausgebildet und weist ein Stapelmodul und eine elastisch verformbare Grundplatte auf. Das Stapelmodul ist dazu ausgebildet, jeweils ein Lageelement auf einem obersten bzw. letzten Lageelement des herzustellenden Brennstoffstapels anzuordnen und somit die Lageelemente, Lageelement um Lageelement, übereinander zu stapeln bzw. anzuordnen. Jedes Lageelement weist eine elastisch verformbare Brennstoffzellenschicht auf, die von einem Dichtungswulst umrandet ist. Dabei wird die Brennstoffzellenschicht jedes Lageelements aufgrund einer Wirkung der Schwerkraft relativ zu dem Dichtungswulst konkav gebogen. Mit dem Stapelmodul ist zuerst ein unterstes bzw. erstes Lageelement auf der biegbaren Grundplatte anzuordnen. Außerdem ist die Grundplatte entgegen der Schwerkraft nach oben zu biegen und dazu ausgebildet, eine Brennstoffzellenschicht eines obersten bzw. letzten bereits gestapelten Lageelements aufgrund einer von der Grundplatte erzeugten Kraft, entgegen der Schwerkraft nach oben zu biegen und/oder anzuheben sowie weitgehend einzuebnen bzw. abzuflachen.

Das System weist einen Biegeantrieb auf, der mindestens einen Stift aufweist und unterhalb der Grundplatte angeordnet ist. Der mindestens eine Stift ist dazu ausgebildet, die Grundplatte entgegen der Schwerkraft zu beaufschlagen und nach oben zu biegen.

Der mindestens eine Stift ist zudem dazu ausgebildet, die biegbare, elastisch verformbare Grundplatte, an einer Position zu beaufschlagen, die sich unterhalb eines Mittelpunkts einer Brennstoffzellenschicht mindestens eines darüber anzuordnenden Lageelements befindet. Hierzu wird der mindestens eine Stift an der vorgesehenen Position angeordnet.

Das Stapelmodul ist zudem dazu ausgebildet, die Lageelemente übereinander kongruent anzuordnen.

Es ist weiterhin möglich, dass das System je nach Definition als zusätzliche Komponenten mindestens einen Sensor und ein Steuergerät aufweist. Dabei ist der Sensor dazu ausgebildet, das Maß der Biegung der Brennstoffzellenschicht des jeweils aktuell obersten Lageelements üblicherweise optisch zu erfassen. Das Steuergerät ist weiterhin dazu ausgebildet, unter Berücksichtigung des ermittelten Maßes der Biegung den Wert der Kraft auszurechnen, mit der die Grundplatte gegen die Brennstoffzellenschichten drücken soll, um ein Durchbiegen der Brennstoffzellenschicht des obersten Lageelements des Brennstoffzellenstapels zu beheben und diese somit einzuebnen. Unter Berücksichtigung dessen ist das Steuergerät weiterhin dazu ausgebildet, eine Kraft zu berechnen, mit der die Grundplatte von dem mindestens einen Stift des Biegeantriebs an einer jeweils vorgesehenen Position zu beaufschlagen ist.

Mit dem Verfahren ist es somit möglich, während des Stapelvorgangs eine gewichtsbedingte Biegung von Brennstoffzellenschichten mit der elastisch verformbaren Grundplatte auszugleichen und somit zumindest die Brennstoffzellenschicht des obersten bzw. letzten Lageelements weitgehend einzuebnen.

Ein Durchbiegen der Brennstoffzellenschichten des herzustellenden Brennstoffzellenstapels wird bei einer möglichen Ausführungsform des Verfahrens mit einer Ausführungsform des Systems ausgeglichen. Dadurch bleibt eine Geometrie der Brennstoffzellenschicht des obersten bzw. letzten Lageelements unverändert, da diese Brennstoffzellenschicht nunmehr mit dem System weitgehend eingeebnet bzw. abgeflacht wird. Dabei wird der Stapelvorgang auf der elastisch verformbaren bzw. biegbaren Grundplatte durchgeführt. Dabei ist es möglich, die Grundplatte bei Bedarf bereits ab dem ersten Lageelement des herzustellenden Brennstoffzellenstapels entgegen der Schwerkraft nach oben zu biegen. Ein Massenmittelpunkt der im Rahmen des Stapelvorgangs bereits übereinander angeordneten Brennstoffzellenschichten wird in Ausgestaltung über dem mindestens einen Stift der Biegevorrichtung an einer Unterseite der Grundplatte, die von dem untersten bzw. ersten Lageelement abgewandt ist, angeordnet. Weiterhin wird dieser mindestens eine Stift u. a. in Richtung des Stapelvorgangs und somit entgegen einer Richtung der Schwerkraft bewegt, wodurch die Grundplatte und weiterhin die darüber angeordneten Brennstoffzellenschichten beaufschlagt und entgegen der Schwerkraft nach oben gebogen werden.

Durch ein schrittweises Bewegen des mindestens einen Stifts entgegen der Richtung der Schwerkraft wird ein Durchbiegen der Brennstoffzellenschichten des herzustellenden Brennstoffzellenstapels, das durch ein Eigengewicht der Brennstoffzellenschichten bedingt ist, ausgeglichen. Somit ist die Brennstoffzellenschicht des obersten bzw. letzten Lageelements vor dem Auflegen eines weiteren bzw. zusätzlichen Lageelements weitgehend eingeebnet bzw. plan. Somit ist es möglich, den Schichtungsvorgang für jede einzelne Brennstoffzellenschicht eines jeweiligen Lageelements, das als letztes auf dem bislang hergestellten Brennstoffzellenstapels angeordnet wird, identisch durchzuführen. Die Brennstoffzellenschicht des Lageelements, das aktuell auf dem unmittelbar zuvor auf dem Brennstoffzellenstapel angeordneten letzten Lageelement angeordnet wird, wird nunmehr auf einer weitgehend ebenen bzw. eingeebneten Brennstoffzellenschicht des zuvor aufgelegten Lageelements angeordnet.

Da es nunmehr möglich ist, eine Brennstoffzellenschicht auf einer flachen Ebene, üblicherweise auf einer vorhergehenden flachen Brennstoffzellenschicht anzuordnen, ist es bspw. nicht mehr erforderlich, einen Greifer zu verwenden, der sich an einen aktuellen Zustand des Brennstoffzellenstapels dynamisch anzupassen hat. Mit dem Verfahren ist es dagegen möglich, für jedes Lageelement und somit für jede Brennstoffzellenschicht unabhängig von einer jeweils aktuellen Höhe des Brennstoffzellenstapels eine identische Prozessbedingung bereitzustellen. Da auf den Greifer nunmehr verzichtet werden kann, werden auch eine Komplexität einer Anlage zum Stapeln des Brennstoffzellenstapels und ein durchzuführender Aufwand verringert. Weiterhin ist es auch möglich, eine Ausfallsicherheit bei Durchführung des Stapelvorgangs zu erhöhen und somit den Stapelvorgang auch zu beschleunigen.

Mit dem Verfahren ist es somit möglich, eine Vielzahl von flächigen Lageelementen, die jeweils eine Brennstoffzellenschicht aufweisen, zu dem Brennstoffzellenstapel zu stapeln. Dabei umfasst jedes Lageelement neben der Brennstoffzellenschicht den bspw. elastischen Dichtungswulst, der die Brennstoffzellenschicht des Lageelements umrandet bzw. umläuft. Im Rahmen des Verfahrens wird üblicherweise von dem Stapelmodul ein jeweils aktuell auf dem bislang gestapelten Brennstoffzellenstapel anzuordnendes Lageelement ergriffen und bspw. aus einem Reservoir hierfür genommen. Die Lageelemente werden mit dem Stapelmodul übereinander kongruent abgelegt, wobei aus den Lageelementen der gemeinsame Brennstoffstapel gebildet wird. Einer durch die Schwerkraft bedingten, üblicherweise konkaven Biegung der Brennstoffzellenschicht des jeweils obersten Lageelements wird durch die Kraft und somit eine konvexe Biegung der Brennstoffzellenschicht des jeweils darunter angeordneten Lageelements entgegengewirkt. Dabei wirkt die von der Grundplatte erzeugte Kraft und somit eine daraus resultierende konvexe Biegung durch sämtliche bereits übereinander angeordnete Brennstoffzellenschichten auf die jeweils oberste Brennstoffzellenschicht übertragen.

Die biegbare Grundplatte, die unterhalb des herzustellenden Brennstoffzellenstapels angeordnet ist, wird mit dem mindestens einen Stift des ansteuerbaren Biegeantriebs entgegen der Schwerkraft konvex nach oben gebogen. Daraus resultiert, dass die Brennstoffzellenschicht des jeweils obersten Lageelements zumindest annähernd bzw. weitgehend plan und somit eben ist.

Das Stapelmodul bzw. ein entsprechender Manipulator ist dazu ausgebildet, ein jeweils auf dem Brennstoffstapel aktuell aufzulegendes Lageelement zu ergreifen und auf dem bislang zuletzt darauf angeordneten Lageelement abzulegen. Während eines derartigen Ablegens wirkt die Kraft der konvex biegbaren Grundplatte, die durch den Biegeantrieb beaufschlagt wird, auf die Brennstoffzellenschicht des unmittelbar zuvor auf dem Brennstoffzellenstapel abgelegten Lageelements. Das Steuergerät ist dazu ausgebildet, den Biegeantrieb anzusteuern und diesem den Wert für die Kraft vorzugeben, mit dem die Grundplatte zu beaufschlagen ist, woraus wiederum resultiert, dass die Brennstoffzellenschicht des jeweils obersten Lageelements zumindest annähernd eben ist. Der Wert für die Kraft wird bspw. aufgrund des aktuellen Maßes für die Biegung der Brennstoffzellenschicht des zuletzt aufgelegten Lageelements ermittelt, wobei die Biegung dieser Brennstoffzellenschicht sensorisch erfasst wird. Der mindestens eine Stift des Biegeantriebs ist bspw. unter einem Mittelpunkt der Grundplatte angeordnet, der wiederum unter einem Mittelpunkt sämtlicher Brennstoffzellenschichten angeordnet ist. Der mindestens eine Stift ist von der Biegevorrichtung entgegen der Schwerkraft in Richtung der Unterseite der Grundplatte auch motorisch ausfahrbar.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in der Zeichnung schematisch dargestellt und wird unter Bezugnahme auf die Zeichnung schematisch und ausführlich beschrieben.
Figur 1 zeigt ein Beispiel eines aus dem Stand der Technik bekannten Brennstoffzellenstapels in schematischer Darstellung.
Figur 2 zeigt in schematischer Darstellung eine Ausführungsform des erfindungsgemäßen Systems.

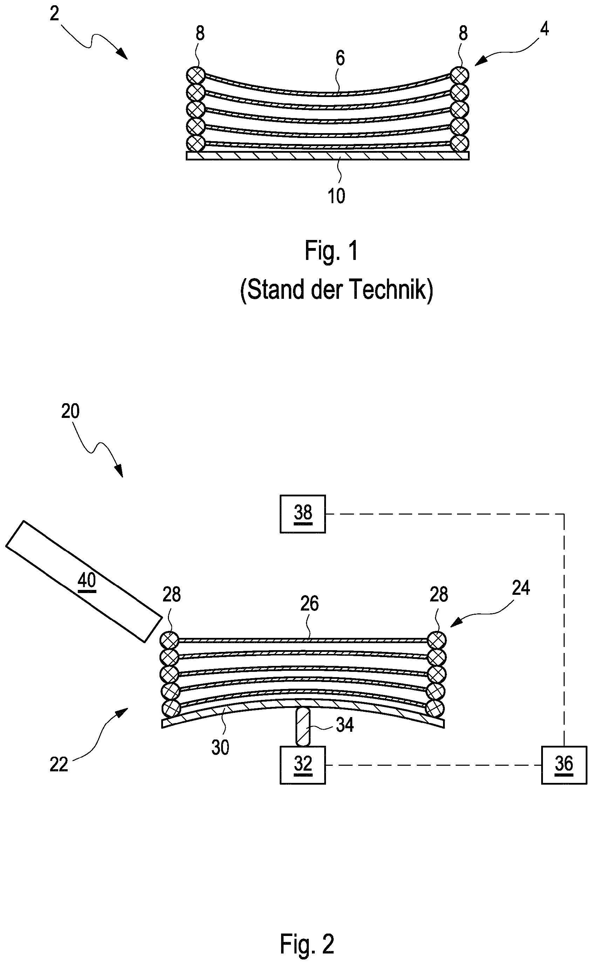

Der in Figur 1 schematisch dargestellte Brennstoffzellenstapel 2 ist aus dem Stand der Technik bekannt und umfasst mehrere übereinander gestapelte Lageelemente 4, wobei jedes derartige Lageelement 4 eine biegeweiche Brennstoffzellenschicht 6 und einen Dichtungswulst 8 aufweist, der die Brennstoffzellenschicht 6 umrandet. Der hier gezeigte Brennstoffzellenstapel 2 ist hier auf einer ebenen Unterlage 10 angeordnet. Wie Figur 1 zeigt, werden die Brennstoffzellenschichten 6 der Lageelemente 4 aufgrund einer Wirkung der Schwerkraft und ihres Eigengewichts verformt und konkav nach unten gebogen.

Die in Figur 2 schematisch dargestellte Ausführungsform des erfindungsgemäßen Systems 20 ist zum Herstellen eines Brennstoffzellenstapels 22 ausgebildet. Der in der Herstellung befindliche Brennstoffzellenstapel 22 umfasst mehrere übereinander gestapelte bzw. geschichtete Lageelemente 24, wobei jedes Lageelement 24 eine biegeweiche Brennstoffzellenschicht 26 und einen Dichtungswulst 28 aufweist, der die biegeweiche Brennstoffzellenschicht 26 umrandet und somit für diese Brennstoffzellenschicht 26 einen Rahmen bildet. Hierbei ist zu beachten, dass der Dichtungswulst 28 dicker als die Brennstoffzellenschicht 26 ist.

Das erfindungsgemäße System 20 umfasst als Komponenten eine biegbare Grundplatte 30, eine Biegevorrichtung 32, die wiederum einen beweglichen Stift 34 aufweist, ein Steuergerät 36 zum Steuern einer Ausführungsform eines Verfahrens zur Durchführung eines Stapelvorgangs zum Herstellen des Brennstoffzellenstapels 22, einen Sensor 38 und ein Stapelmodul 40.

Zu Beginn des Stapelvorgangs wird mit dem Stapelmodul 40 auf der Grundplatte 30 ein erstes Lageelement 24 angeordnet. Danach werden nacheinander mehrere derartige Lageelemente 24 mit dem Stapelmodul 40 übereinander gestapelt. Dabei ist es möglich, bereits ab dem ersten bzw. untersten Lageelement 24 eine evtl. auftretende Biegung der Brennstoffzellenschicht 26 dieses untersten Lageelements 24 mit dem Sensor 38, der bspw. als Kamera ausgebildet ist, optisch zu erfassen.

Eine Bedingung zum definierbaren bzw. definierten Durchführen des Stapelvorgangs ist, dass eine Brennstoffzellenschicht 26 eines Lageelements 24, das aktuell auf dem bereits bzw. bislang gebildeten Brennstoffzellenstapel 22 anzuordnen ist, auf einer möglichst ebenen bzw. planen Brennstoffzellenschicht des untermittelbar zuvor auf dem Brennstoffzellenstapel 22 aufgelegten Lageelements 24 aufgelegt wird, weshalb zu vermeiden ist, dass die Brennstoffzellenschicht 26 des jeweils obersten Lageelements 24 nicht, wie im Fall des Stands der Technik, üblicherweise konkav in Richtung der Schwerkraft nach unten gebogen wird.

Ein Maß für die Biegung der Brennstoffzellenschicht 26 des obersten Lageelements 24 wird von dem Sensormodul 38 erfasst und an das Steuergerät 36 weitergeleitet. Das Steuergerät 36 ist dazu ausgebildet, aufgrund des ermittelten bzw. erfassten Maßes für die Biegung einen Wert für eine Kraft zu berechnen, mit der der Stift 34 von der Biegevorrichtung 32 gegen eine Unterseite der biegsamen Grundplatte 30 zu drücken ist. Daraus ergibt sich, dass sämtliche Brennstoffzellenschichten 26 sämtlicher bereits gestapelter Lageelemente 24 entgegen der Schwerkraft konvex nach oben gebogen werden. Ein jeweils vorzusehender Wert für die Kraft wird in Abhängigkeit des Maßes für die Biegung ermittelt, wobei sich ergibt, dass die Brennstoffzellenschicht 26 des obersten Lageelements 24 eingeebnet bzw. abgeflacht wird, wobei zumindest eine Biegung der Brennstoffzellenschicht 26 des obersten Lageelements 24 kompensiert wird.

Durch Einsatz des vorgestellten Systems 20 zur Durchführung des Stapelvorgangs wird eine mögliche Voraussetzung zur kontinuierlichen Durchführung des Stapelvorgangs geschaffen, da es nunmehr möglich ist, eine Brennstoffzellenschicht 26 eines Lageelements 24, das aktuell auf dem herzustellenden Brennstoffzellenstapel 22 aufzulegen ist, auf einer ebenen bzw. planen Brennstoffzellenschicht 26 des zuletzt aufgelegten Lageelements 24 aufzulegen.

Bei einer Durchführung des Verfahrens durch das System 20 wird der parallel zu einer Richtung der Schwerkraft bewegliche Stift gegen die Unterseite der biegbaren Grundplatte 30 gedrückt, wobei diese konvex nach oben gebogen wird. Daraus resultiert, dass die darüber angeordneten Brennstoffzellenschichten 26 ausgehend von einer Wirkung des Stifts 34 und der Grundplatte 30 sowie aufgrund einer Wirkung der Brennstoffzellenschichten 26 untereinander verformt und nach oben gebogen werden, wodurch eine etwaige Verformung der Brennstoffzellenschichten 26 aufgrund ihres Eigengewichts ausgeglichen wird. Bei der vorgestellten Ausführungsform des Systems 20 ist der Stift 34 unter einem Massenmittelpunkt des Brennstoffzellenstapels 22 angeordnet. Hierbei ist es möglich, dass eine Kraft, mit der der Stift über die Grundplatte 30 von unten gegen die Brennstoffzellenschichten 26 des Brennstoffzellenstapels 22 drückt, einer Gewichtskraft des Brennstoffzellenstapels 22 entspricht. Die von der Grundplatte 30 und/oder dem Stift 34 erzeugte Kraft ist der Schwerkraft entgegengerichtet.

## Patentansprüche

1. Verfahren zum Herstellen eines Brennstoffzellenstapels (22) aus mehreren Lageelementen (24), wobei die Lageelemente (24) übereinander angeordnet werden, wobei jedes Lageelement (24) eine elastisch verformbare Brennstoffzellenschicht (26) aufweist, die von einem Dichtungswulst (28) umrandet ist, wobei die Brennstoffzellenschicht (26) jedes Lageelements (24) aufgrund einer Wirkung der Schwerkraft relativ zu dem Dichtungswulst (28) gebogen wird, wobei ein unterstes Lageelement (24) auf einer biegbaren Grundplatte (30) angeordnet wird, die entgegen der Schwerkraft gebogen wird, wodurch eine Brennstoffzellenschicht (26) eines obersten Lageelements (24) des Brennstoffzellenstapels (22) aufgrund einer Kraft, die von der Grundplatte (30) erzeugt wird, entgegen der Schwerkraft gebogen sowie weitgehend eingeebnet wird.

2. Verfahren nach Anspruch 1, bei dem Brennstoffzellenschichten (26) sämtlicher Lageelemente (24), die bereits über der Grundplatte (30) angeordnet sind, aufgrund der von der Grundplatte (30) erzeugten Kraft ebenfalls entgegen der Schwerkraft gebogen werden, wobei die Kraft der Grundplatte (30) über Brennstoffzellenschichten (26) sämtlicher Lageelemente (24) zwischen der Grundplatte (30) und dem obersten Lageelement (24) auf die Brennstoffzellenschicht (26) des obersten Lageelements (24) übertragen wird.

3. Verfahren nach Anspruch 1 oder 2, bei dem zwischen zwei Lageelementen (24) ein weiteres flaches Modul angeordnet wird, das aufgrund der Kraft, die von der Grundplatte (30) erzeugt wird, ebenfalls entgegen der Schwerkraft gebogen wird.

4. Verfahren nach einem der voranstehenden Ansprüche, bei dem ein Maß für eine Biegung der Brennstoffzellenschicht (26) des obersten Lageelements (24) ermittelt wird, wobei ein Wert für die Kraft, die von der Grundplatte (30) zu erzeugen ist, aufgrund dieses Maßes eingestellt wird.

5. Verfahren nach einem der voranstehenden Ansprüche, bei dem ein zusätzliches Lageelement (24) auf dem obersten bereits gestapelten Lageelement (24) angeordnet wird, dessen Brennstoffzellenschicht (26) weitgehend eingeebnet ist.

6. System zum Herstellen eines Brennstoffzellenstapels (22) aus mehreren Lageelementen (24), das ein Stapelmodul (40) und eine biegbare Grundplatte (30) aufweist, wobei das Stapelmodul (40) dazu ausgebildet ist, jeweils ein Lageelement (24) auf einem obersten Lageelement (24) des herzustellenden Brennstoffstapels (22) anzuordnen, wobei jedes Lageelement (24) eine elastisch verformbare Brennstoffzellenschicht (26) aufweist, die von einem Dichtungswulst (28) umrandet ist, wobei die Brennstoffzellenschicht (26) jedes Lageelements (24) aufgrund einer Wirkung der Schwerkraft relativ zu dem Dichtungswulst (28) gebogen wird, wobei ein unterstes Lageelement (24) auf der biegbaren Grundplatte (30) anzuordnen ist, wobei die elastisch verformbare Grundplatte (30) entgegen der Schwerkraft zu biegen und dazu ausgebildet ist, eine Brennstoffzellenschicht (26) eines obersten Lageelements (24) aufgrund einer von der Grundplatte (30) erzeugten Kraft entgegen der Schwerkraft zu biegen sowie weitgehend einzuebnen.

7. System nach Anspruch 6, das einen Biegeantrieb (32) aufweist, der mindestens einen Stift (34) aufweist und unterhalb der elastisch verformbaren Grundplatte (30) angeordnet ist, wobei der mindestens eine Stift (34) dazu ausgebildet ist, die Grundplatte (30) entgegen der Schwerkraft zu beaufschlagen und zu biegen.

8. System nach Anspruch 7, bei dem der mindestens eine Stift (34) dazu ausgebildet ist, die Grundplatte (30) an einer Position zu beaufschlagen, die sich unterhalb eines Mittelpunkts einer Brennstoffzellenschicht (26) mindestens eines darüber anzuordnenden Lageelements (24) befindet.

9. System nach einem der Ansprüche 6 bis 8, bei dem das Stapelmodul (40) dazu ausgebildet ist, die Lageelemente (24) übereinander kongruent anzuordnen.

## Claims

1. Method for producing a fuel cell stack (22) from multiple layer elements (24), wherein the layer elements (24) are arranged on top of one another, wherein each layer element (24) has an elastically deformable fuel cell layer (26) edged by a sealing beading (28), wherein the fuel cell layer (26) of each layer element (24) is bent relative to the sealing beading (28) due to an effect of gravity, wherein a lowermost layer element (24) is arranged on a bendable base plate (30) which is bent against gravity, whereby a fuel cell layer (26) of an uppermost layer element (24) of the fuel cell stack (22) is bent against gravity and substantially levelled due to a force generated by the base plate (30).

2. Method according to claim 1, in which fuel cell layers (26) of all the layer elements (24) which are already arranged above the base plate (30) are also bent against gravity due to the force generated by the base plate (30), wherein the force of the base plate (30) is transmitted to the fuel cell layer (26) of the uppermost layer element (24) via fuel cell layers (26) of all layer elements (24) between the base plate (30) and the uppermost layer element (24).

3. Method according to claim 1 or 2, in which a further flat module is arranged between two layer elements (24), said module being also bent against gravity due to the force which is generated by the base plate (30).

4. Method according to any one of the preceding claims, in which a measure for a bending of the fuel cell layer (26) of the uppermost layer element (24) is determined, wherein a value for the force to be generated by the base plate (30) is set on the basis of this measure.

5. Method according to any one of the preceding claims, in which an additional layer element (24) is arranged on the uppermost layer element (24) already stacked, the fuel cell layer (26) of which is substantially levelled.

6. System for producing a fuel cell stack (22) from a plurality of layer elements (24), which has a stack module (40) and a bendable base plate (30), wherein the stack module (40) is designed to arrange respectively one layer element (24) on an uppermost layer element (24) of the fuel stack (22) to be produced, wherein each layer element (24) has an elastically deformable fuel cell layer (26) edged by a sealing beading (28), wherein the fuel cell layer (26) of each layer element (24) is bent relative to the sealing beading (28) due to an effect of gravity, wherein a lowermost layer element (24) is arranged on the bendable base plate (30), wherein the elastically deformable base plate (30) bends against gravity and is designed to bend and substantially level a fuel cell layer (26) of an uppermost layer element (24) due to a force generated by the base plate (30).

7. System according to claim 6, which has a bending drive (32), which has at least one pin (34) and is arranged below the elastically deformable base plate (30), wherein the at least one pin (34) is designed to act on the base plate (30) against gravity and to bend it.

8. System according to claim 7, in which the at least one pin (34) is configured to act on the base plate (30) at a position which is below a centre point of a fuel cell layer (26) of at least one layer element (24) to be arranged above it.

9. System according to any one of claims 6 to 8, in which the stack module (40) is designed to arrange the layer elements (24) congruently one above the other.

## Revendications

1. Procédé de fabrication d'une pile de cellules à combustible (22) à partir de plusieurs éléments support (24), dans lequel les éléments support (24) sont agencés les uns sur les autres, dans lequel chaque élément support (24) présente une couche de cellules à combustible (26) déformable élastiquement qui est bordée par un cordon d'étanchéité (28), dans lequel la couche de cellules à combustible (26) de chaque élément support (24) est fléchie par rapport au cordon d'étanchéité (28) en raison de l'effet de la gravité, dans lequel un élément support (24) le plus bas est agencé sur une plaque de base flexible (30), qui est fléchie à l'encontre de la gravité, ce qui veut dire qu'une couche de cellules à combustible (26) d'un élément support (24) le plus haut de la pile de cellules à combustible (22) est fléchie à l'encontre de la force de gravité ainsi qu'en grande partie aplanie en raison d'une force qui est générée par la plaque de base (30).

2. Procédé selon la revendication 1, dans lequel les couches de cellules à combustible (26) de tous les éléments support (24), qui sont déjà agencés au-dessus des plaques de base (30), sont aussi fléchies à l'encontre la force de gravité en raison de la force générée par la plaque de base (30), dans lequel la force de la plaque de base (30) sur des couches de cellules à combustible (26) de tous les éléments support (24) entre la plaque de base (30) et l'élément support (24) le plus haut est transmise sur la couche de cellules à combustible (26) de l'élément support (24) le plus haut.

3. Procédé selon la revendication 1 ou 2, dans lequel un module plat supplémentaire est agencé entre deux éléments support (24), lequel est également fléchi à l'encontre de la force de gravité en raison de la force qui est générée par la plaque de base (30).

4. Procédé selon l'une quelconque des revendications précédentes, dans lequel une mesure est déterminée pour une flexion de la couche de cellules à combustible (26) de l'élément support (24) le plus haut, dans lequel une valeur pour la force qui doit être générée par la plaque de base (30) est réglée en raison de cette mesure.

5. Procédé selon l'une quelconque des revendications précédentes, dans lequel un élément support (24) additionnel est agencé sur l'élément support (24) le plus haut déjà empilé, dont la couche de cellules à combustible (26) est en grande partie aplanie.

6. Système de fabrication d'une couche de cellules à combustible (22) à partir de plusieurs éléments support (24), qui présente un module d'empilement (40) et une plaque de base flexible (30), dans lequel le module d'empilement (40) est réalisé pour agencer respectivement un élément support (24) sur un élément support (24) le plus haut de la pile de combustible à fabriquer (22), dans lequel chaque élément support (24) présente une couche de cellules à combustible (26) déformable élastiquement, qui est bordée par un cordon d'étanchéité (28), dans lequel la couche de cellules à combustible (26) de chaque élément support (24) est fléchie en raison de l'effet de la gravité par rapport au cordon d'étanchéité (28), dans lequel un élément support (24) le plus bas est agencé sur la plaque de base flexible (30), dans lequel la plaque de base (30) déformable élastiquement doit être fléchie à l'encontre de l'effet de la gravité et est réalisée pour fléchir ainsi qu'aplanir en grande partie une couche de cellules à combustible (26) d'un élément support (24) le plus haut à l'encontre de la force de gravité en raison d'une force générée par la plaque de base (30).

7. Système selon la revendication 6 qui présente un entraînement de courbure (32) qui présente au moins une tige (34) et est agencé sous la plaque de base (30) déformable élastiquement, dans lequel l'au moins une tige (34) est réalisée pour presser et fléchir la plaque de base (30) à l'encontre de la force de gravité.

8. Système selon la revendication 7, dans lequel l'au moins une tige (34) est réalisée pour presser la plaque de base (30) au niveau d'une position qui se trouve en dessous d'un point central d'une couche de cellules à combustible (26) d'au moins un élément support (24) à agencer au-dessus de celui-ci.

9. Système selon l'une quelconque des revendications 6 à 8, dans lequel le module d'empilement (40) est réalisé pour agencer les éléments support (24) les uns au-dessus des autres de manière congruente.
